(19) Europäisches Patentamt
European Patent Office
Office européen des brevets

(11) **EP 3 252 010 A1**

(12) **EUROPÄISCHE PATENTANMELDUNG**

(43) Veröffentlichungstag:
06.12.2017  Patentblatt 2017/49

(51) Int Cl.:
*C01F 11/18* (2006.01)  *D21H 17/67* (2006.01)
*D21H 19/38* (2006.01)  *D21H 21/52* (2006.01)

(21) Anmeldenummer: **16172229.3**

(22) Anmeldetag: **31.05.2016**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **HF Biotec Berlin GmbH**
**12489 Berlin (DE)**

(72) Erfinder:
• **Follmann, Heinrich**
**12589 Berlin (DE)**
• **Bieren, Dimitrij**
**13581 Berlin (DE)**
• **Neubert, Andrea**
**16341 Panketal (DE)**

(74) Vertreter: **Gulde & Partner**
**Patent- und Rechtsanwaltskanzlei mbB**
**Wallstraße 58/59**
**10179 Berlin (DE)**

(54) **PRÄZIPITIERTES CALCIUMCARBONAT (PCC) MIT DEFINIERTER KORNGRÖSSE UND KORNGRÖSSENVERTEILUNG SOWIE VERFAHREN ZUR HERSTELLUNG DESSELBEN**

(57)  Die Erfindung betrifft ein Verfahren zur Herstellung von präzipitiertem Calciumcarbonat (PCC) mit einer definierten Korngröße und definierten Korngrößenverteilung. Ferner betrifft die Erfindung PCC, das nach dem Verfahren herstellbar ist und eine definierte Korngröße und definierte Korngrößenverteilung aufweist. Der Erfindung liegt nun unter anderem die Erkenntnis zugrunde, dass der spezifische molare Energieeintrag der maßgebende steuernde Parameter für die Korngröße ist.

Fig. 2

EP 3 252 010 A1

**Beschreibung**

Die Erfindung betrifft ein Verfahren zur Herstellung von präzipitiertem Calciumcarbonat (PCC) mit einer definierten Korngröße und definierten Korngrößenverteilung. Ferner betrifft die Erfindung PCC, das nach dem Verfahren herstellbar ist und eine definierte Korngröße und definierte Korngrößenverteilung aufweist.

**Technologischer Hintergrund**

Nach Stand der Technik ist eine Vielzahl von Verfahren bekannt, bei denen in wässriger Suspension aus $Ca(OH)_2$ (der sogenannten Kalkmilch) unter Eintrag von $CO_2$ das PCC gebildet wird. Das $CO_2$ kann dabei in flüssiger Form oder über ein geeignetes Belüftungssystem als Gas in die Kalkmilch eingetragen werden. Unter Zuhilfenahme von Additiven oder Impfkristallen und bei entsprechend angepasster Verfahrensführung lassen sich die gewünschten PCC-Morphologien erzeugen. Großtechnisch wird üblicherweise im Batch-Betrieb gearbeitet.

Modifikationen des PCC sind in der Literatur hinlänglich beschrieben. Unter dem Begriff "Modifikation" wird vorliegend die Familie der industriell erzeugten Kristalle definierter Morphologie verstanden, von denen besonders bedeutend Aragonite und Calcite und weitaus weniger bedeutend Vaterite und Ikaite sind. Ferner existieren spezielle Übergangsformen, wie z.B. basische Calciumcarbonate oder amorphe Carbonate, die ebenfalls isolierbar sind. Der Fachmann in der Industrie kennt in der Regel die teilweise recht komplexen Randbedingungen seiner PCC-Anlage, welche die Modifikation beeinflussen können, aus zahlreichen Versuchen und Fehlversuchen. Grundsätzliche steuernde Parameter, wie die Starttemperatur zu Beginn eines typischen Batch-Zyklus in Verbindung mit der Konzentration der vorgelegten Kalkmilch und der $CO_2$-Konzentration, werden vorab festgelegt. Einflüsse aus dem Rohstoff werden in langen Versuchsreihen eliminiert und gegebenenfalls durch Additive diverser Art beherrschbar gemacht. Ebenfalls gelingt es, den Agglomerationsgrad der PCC-Kristalle durch Beeinflussung der Reaktionsbedingungen einzustellen.

In den letzten Jahren sind verstärkt verwendungstechnische Eigenschaften des PCC gefordert worden, die sich sowohl auf eine exakte mittlere Korngröße (D4,3 Wert), als auch definierte Korngrößenverteilung für eine bestimmte PCC-Modifikation beziehen.

So wird beispielsweise in Standardprozessen für skaleonedrisches präzipitiertes Calciumcarbonat (s-PCC) eine mittlere Korngröße D4,3 von etwa 2,1 bis 2,2 $\mu$m erreicht. Für Formulierungen zur Herstellung von Thermopapieren wäre jedoch ein s-PCC mit mittlerer Korngröße D4,3 von 1,3 bis 1,5 $\mu$m vorteilhaft. Eine nicht passende mittlere Korngröße D4,3 kann nachteilige Folgen in der zur Herstellung der Thermopapiere verwendeten Formulierung bedingen, wie Fadenriss, verändertes Viskositätsverhalten und unvollständige Leimung.

Ferner wird s-PCC zur Herstellung von Kopierpapier verwendet. Hier wäre insbesondere ein s-PCC mit einer mittleren Korngröße D4,3 von 2,8 bis 3 $\mu$m vorteilhaft, denn dann kann der Füllgrad im Papier angehoben werden. Auf diese Weise ließe sich der Anteil des wesentlich kostspieligeren Zellstoffs reduzieren. Genauere Voruntersuchungen haben jedoch gezeigt, dass mit größer werdendem D4,3 Wert auch die Breite der Korngrößenverteilung zunimmt, was sich nachteilig auf einige Papiereigenschaften, wie beispielsweise die Reißfestigkeit, auswirkt.

Rhomboedrisches präzipitiertes Calciumcarbonat (r-PCC) findet als Füllstoff für hochopake Dünnschichtpapiere Anwendung. In dieser Applikation wäre eine mittlere Korngröße D4,3 von 1,4 bis 1,7 $\mu$m wünschenswert. Abweichende Korngrößen führen zu einer Verschlechterung in der Opazität.

Ein weiteres Beispiel ist die Anwendung von kleinteiligem PCC in der Kunststoffindustrie, speziell als Additiv bei Polycarbonaten und Polyamiden. Hier besteht das anhaltende Bedürfnis, möglichst ein PCC mit einer streng begrenzten Korngrößenverteilung zwischen 0,2 $\mu$m und 1 $\mu$m einzusetzen. Sogenanntes Oberkorn stört den Herstellungsprozess, etwaiges Unterkorn führt zu einem erhöhten Bedarf an Stabilisierungsmitteln. Bislang ist noch kein PCC gefunden worden, das diese Anforderungen zu erfüllen vermag; handelsübliche PCCs im passenden Bereich eines D4,3 Wertes weisen immer störende größere und kleinere Partikel auf.

In den geschilderten Anwendungen wäre es demnach immer auch vorteilhaft, wenn die Korngrößenverteilung sehr eng ist.

Allerdings gibt es bisher keinen systematischen Ansatz zur Herstellung von PCC mit einer definierten Korngröße und definiert (engen) Korngrößenverteilung. Ursache hierfür mag das komplexe Zusammenspiel einer Vielzahl von Parametern sein. Diese umfassen beispielsweise Begasungsparameter in Verbindung mit der $CO_2$-Konzentration, die geodätisch wirksame Höhe eines Reaktors und den dissipativen Energieeintrag. Weiterhin ändern sich bei einer typischen Batch-Reaktion, die industriell dominierend ist, in jedem Augenblick der Reaktion wichtige Prozessparameter in einer jeweils unterschiedlichen Charakteristik, wie z.B. der pH-Wert der zu begasenden Suspension, die Leitfähigkeit, die Temperatur, das Verhältnis von freien Calcium-Ionen zu Bicarbonat-Ionen, die Dichte der Suspension und die Viskosität der Suspension. Die Dynamik der genannten Änderungen ist zudem nicht gleichbleibend stetig, sondern einige der Parameter ändern sich erst gegen Ende des Batch-Zyklus erkennbar, dann aber dramatisch, wie der pH-Wert und die Leitfähigkeit; andere Parameter zeigen jedoch eine quasi lineare Änderungscharakteristik, wie die Temperatursteigerung, die Änderung der Dichte und der Viskosität. Hinzu kommt noch der Umstand, dass sich offensichtlich zwei Hauptphasen während der Carboxylierung abspielen, eine Phase der bevorzugten Keimbildung gleich zu Anfang der Reaktion gefolgt von einer Phase des tendenziell bevorzugten Keimwachstums. Wie in der jüngeren Literatur beschrieben, verläuft die Keimbildung auch nicht gradlinig, sondern über eine ganze Reihe von Zwischenstufen unterschiedlichster Morphologie.

Aus diesen Gründen sind die Kenntnisse darüber, welche der zahlreichen Phänomene für die charakteristische Ausprägung der mittleren Korngröße (D4,3 Wert) sowie die Breite der Korngrößenverteilung maßgeblich, beeinflussbar und einstellbar sind, allenfalls sehr limitiert. Es bestehen demnach kaum Anhaltspunkte, welche Maßnahmen der Fachmann an einer bestehenden PCC-Anlage zu ergreifen hat, um zu einem Produkt mit einer definierten Korngröße, als auch definierter Korngrößenverteilung zu gelangen. Das Ziel könnte daher bisher allenfalls erratisch erreicht werden.

US 6,251,356 B1 schlägt vor, in einem Druckreaktor über die Höhe des aufgebauten Arbeitsdruckes die mittlere Korngröße zu beeinflussen. Das Korngrößenverhältnis soll gegenüber konventioneller Verfahrensführung enger sein. Das Verfahren selber ist technisch sehr aufwendig.

EP 1 222 146 B1 betrifft ein zweistufiges kontinuierliches Verfahren. In der ersten Stufe wird eine bestimmte Konzentration an Keimen erzeugt. Hierzu wird der Volumendurchsatz der Kalkmilch bei konstantem Gasdurchsatz verändert. Zusätzlich wird Einfluss auf die angestrebte Korngröße durch Vorlage einer feinen Kalkmilch angenommen, deren Reaktivität erhöht ist.

Laut Gernot Krammer et al. (Part. Part. Syst. Charact. 19 (2002) 348- 353) führt eine steigende $CO_2$-Konzentration zu einer Verkleinerung der mittleren Korngröße. Einen gegenteiligen Einfluss der $CO_2$-Konzentration auf die mittlere Korngröße beschreiben Bo Feng et al., Materials Science and Engineering A 445- 446 (2007) 170- 179 " Effect of various factors on the particle size of calcium carbonate formed in a precipitation process".

Die Konzentration der Kalkmilch ist ein weiterer Parameter, der die mittlere Korngröße beeinflusst (Kralj et Brecivic aus Croatica Chimica Acta, 80 (3-4) 467- 484 (2007) "On Calcium Carbonates from fundamental research to application"). Höhere Feststoffgehalte in der Kalkmilch führen in der Regel zu gröberen Partikeln, geringere Feststoffgehalte sollen zu feineren Partikeln führen.

Es ist ferner bekannt, dass bei kontinuierlichem Betrieb einer PCC-Anlage aragonitische Kristalle allmählich größer werden.

Pust (aus Dissertation "Die Herstellung von gefälltem Calciumcarbonat - PCC" RWTH Aachen, 1992) beschreibt den Einfluss der Löschparameter bei der Herstellung von Branntkalk auf die Größe der später während der Carboxylierung entstehenden Kristalle.

EP 1 712 597 A1 beschreibt den Einfluss der Zugabe diverser Additive, wie Zn-Salze, Mg-Salze, und kationischer und anionische Dispergierungsmittel auf die Korngrößenverteilung.

Es besteht somit ein anhaltender Bedarf nach systematischen Lösungsansätzen, die es ermöglichen, mit einer gegebenen PCC-Anlage präzipitiertes Calciumcarbonat einer definierten Korngröße und definierten Korngrößenverteilung herzustellen.

## Zusammenfassung der Erfindung

Die geschilderten Limitierungen des Standes der Technik lassen sich mit Hilfe des erfindungsgemäßen Verfahrens zur Herstellung von präzipitiertem Calciumcarbonat (PCC) durch Einleiten von Kohlendioxid in Kalkmilch in einer PCC-Anlage beheben oder zumindest mindern. Das PCC weist dabei eine Korngrößenverteilung auf, bei der $\frac{D\,4,3}{D\,90} \, mal \, 100 \geq 59,$ bevorzugt $\geq 60$, besonders bevorzugt $\geq 62$ und ganz besonders bevorzugt $\geq 65$ ist. Je nach Verfahrensführung liegt die mittlere Korngröße D4,3 für

(i) scalenoedrisches präzipitiertes Calciumcarbonat (s-PCC) im Bereich von 1,5 bis 5,0 $\mu m$, besonders bevorzugt 2,0 bis 4,0 $\mu m$, insbesondere 2,9 bis 3,1 $\mu m$; oder

(ii) rhomboedrisches präzipitiertes Calciumcarbonat (r-PCC) im Bereich von 0,5 bis 2,5 $\mu m$, besonders bevorzugt 0,8 bis 2,2 $\mu m$, insbesondere 0,9 bis 2 $\mu m$; oder

(iii) aragonitisches präzipitiertes Calciumcarbonat (a-PCC) im Bereich von 1 bis 30 $\mu m$, besonders bevorzugt 2 bis 20 $\mu m$, insbesondere 2,5 bis 15 $\mu m$.

Das Verfahren umfasst dazu die folgenden Schritte:

a) Erfassen aller Parameter der PCC-Anlage, die im Betrieb der PCC-Anlage einen wesentlichen Beitrag auf den spezifischen molaren Energieeintrag liefern, wobei der spezifische molare Energieeintrag dem Energieeintrag des Gesamtsystems entspricht, der erforderlich ist, um ein Mol $CO_2$ von Beginn der Reaktion bis zu einem Umsetzungsgrad von 90% der batchweise verlaufenden Carboxylierungsreaktion einzutragen;

b) Festlegen der mittleren Korngröße D4,3 in Abhängigkeit vom spezifischen molaren Energieeintrag;

c) Festlegen des $\frac{D\,4,3}{D\,90}$-Verhältnisses in Anhängigkeit von zumindest einem der folgenden Parameter: $CO_2$-Konzentration während der Reaktion, Temperatur der Kalkmilch, Füllstand im Reaktor der PCC-Anlage, und Drehzahl eines Begasungsrührers der PCC-Anlage; und

d) Einleiten von Kohlendioxid in die Kalkmilch unter Maßgabe der in den Schritten b) und c) bestimmten Vorgaben.

Es gibt unterschiedliche Möglichkeiten, die Breite oder Enge der Korngrößenverteilung zu beschreiben. Vorliegend erfolgt die Charakterisierung über das im Bereich von Partikelgütern, wie PCC, häufig verwendete Verhältnis von $\frac{D\,4,3}{D\,90}$. D90 bedeutet dabei, dass 90% der Partikel volumengewichtet kleiner als der zugewiesene Wert sind.

Die mittlere Korngröße D4,3 ist der arithmetische Mittelwert einer Verteilung über alle Partikel. Eine sehr enge Korngrößenverteilung ist zum Beispiel gegeben, wenn der D4,3 bei 3,1 und der zugehörende D90 bei 5,0 μm liegt. Für das $\frac{D\,4,3}{D\,90}\,mal\,100$-Verhältnis resultiert dann der Zahlenwert 62. Die Angaben gelten für die Ausbildung der sogenannten Primärpartikel des PCC-Prozesses. Agglomerationen zu einem späteren Zeitpunkt bleiben unberücksichtigt.

Die Größenbestimmung kann mit einem Laserbeugungs-Partikelgrößenmessgerät erfolgen. Alle Werte beziehen sich auf ein dispergiertes Produkt, um Agglomeration möglichst auszuschließen. Vorliegend wurden alle Messungen entweder mit einem Partikelgrößenanalysator der Firma Malvern (Gerätebezeichnung Malvern 3000) oder der Firma Quantachrome (Gerätebezeichnung Cilas 1064 L) durchgeführt. Beide Messgeräte sind in der Papierindustrie sehr gebräuchlich und lieferten stets sehr ähnliche Werte.

Der Erfindung liegt nun unter anderem die Erkenntnis zugrunde, dass der spezifische molare Energieeintrag der maßgebende steuernde Parameter für die Korngröße ist. Dieser Wert beschreibt die Summe des spezifischen Energieeintrages des Gesamtsystems, der erforderlich ist, um ein Mol $CO_2$ im maßgeblichen Teil der Reaktion von etwa Null bis 90% der batchweise verlaufenden Carboxylierungsreaktion einzutragen. Der Energieeintrag ist unabhängig davon, aus welcher Quelle er stammt, zu erfassen. Bei einer herkömmlichen PCC-Anlage werden insbesondere Beiträge aus der anliegenden $CO_2$-Konzentration des Gases, des volumetrischen spezifischen Gasdurchsatzes, des Füllstandes des Reaktors, der Umdrehungszahl der frequenzgesteuerten Begasungsturbine beziehungsweise des Rührorganes, der Leistungsabgabe eines vorgeschalteten Gebläses, sofern eines vorhanden ist, bei der Bestimmung des spezifische Energieeintrags zu berücksichtigen sein.

Im Schritt a) des Verfahrens werden demnach die einzelnen Einflussgrößen einer PCC-Anlage erfasst, die einen nennenswerten Beitrag zum spezifischen molaren Energieeintrag liefern. Es hat sich gezeigt, dass der kumulierte Beitrag all dieser Einflussgrößen auf den spezifischen molaren Energieeintrag in direktem Zusammenhang mit der zu erzielenden Korngröße steht.

Im Schritt b) wird daher dieser Zusammenhang für die in Frage stehende PCC-Anlage ermittelt. Grundsätzlich wurde festgestellt, dass die Korngröße mit zunehmendem spezifischen molaren Energieeintrag abnimmt. Vorzugsweise wird im Schritt b) dazu ein linearer Zusammenhang zwischen der mittleren Korngröße D4,3 und dem spezifischen molaren Energieeintrag des Gesamtsystems ermittelt. Zur konkreten Bestimmung des Zusammenhangs zwischen dem spezifischen molaren Energieeintrag und der Korngröße an einer PCC-Anlage werden in der Praxis beispielsweise eine Anzahl von Testeinstellungen mit vorgegebenem spezifischen molaren Energieeintrag gefahren und anschließend die Korngrößen bestimmt. Beide Werte werden gegeneinander aufgetragen und über ein graphisches Auswerteverfahren eine zugehörige lineare Funktion bestimmt. Für eine gewünschte Korngröße kann nun mit Hilfe der Funktion der notwendige Energieeintrag ermittelt werden. Anschließend werden die Einflussgrößen entsprechend angepasst, um diesen Energieeintrag darzustellen.

Es wurde demnach überraschenderweise gefunden, dass ausschließlich der spezifische Energieeintrag des Stoffeintragungssystems den entscheidenden Parameter für die Korngröße der entstehenden Kristalle darstellt. Er kann aus beliebigen Kombinationen der Begasungsparameter mit der anliegenden $CO_2$-Konzentration so eingestellt werden kann, dass der Zielwert für die gewünschte Korngröße gebildet wird. Es ist somit erstmalig möglich, mit den Grundkenntnissen über die Kennwerte der Begasungseinrichtung gezielt Vorgaben für die Korngröße der PCC-Kristalle zu machen.

Das Verhältnis $\frac{D\,4,3}{D\,90}\,mal\,100$ liegt bei herkömmlich hergestellten Partikelgrößen im Bereich von etwa 2,8 μm und größer bei maximal 55 und ist in der Regel zumeist deutlich kleiner. Dies ist zurückzuführen auf spinodale Entmischungsvorgänge während der Carboxylierung, die dazu führen, dass ständig kleinere Zonen mit gegenüber dem Durchschnittswert höherer beziehungsweise niedrigerer Übersättigung auftreten. In der Folge bilden sich einerseits neue kleinere Keime, andererseits wachsen bereits vorhandene Kristalle weiter zu größeren Kristallen auf.

Erst im Rahmen der vorliegenden Erfindung wurde nun experimentell ermittelt, welche Einflussfaktoren aus der Fülle nahezu unendlicher Möglichkeiten für die Korngrößenverteilung tatsächlich bedeutsam und bei der Festlegung des jeweils gewünschten Verhältnisses von $\frac{D\,4,3}{D\,90}\,mal\,100$ zu berücksichtigen sind. Ermittelt wurden die folgenden Parameter: $CO_2$-Konzentration während der Reaktion, Temperatur der Kalkmilch, Füllstand im Reaktor der PCC-Anlage, und Drehzahl eines Begasungsrührers der PCC-Anlage (Schritt c) des Verfahrens). Die vier Maßnahmen können einzeln oder in beliebiger Kombination angewendet werden und bewirken bei sinnfälliger Berücksichtigung eine Verkleinerung der Korngrößenverteilung.

Insbesondere ist bevorzugt, wenn im Schritt c) zu Beginn der Reaktion die $CO_2$-Konzentration dem 0,5 bis 0,8-fachem, insbesondere 0,6 bis 0,7-fachem der $CO_2$-Konzentration am Ende der Reaktion entspricht und die $CO_2$-Konzentration kontinuierlich oder stufenweise erhöht wird. Wenn also, was fast immer der Fall ist, ein fester Wert für die $CO_2$-Konzentration der Quelle bekannt ist (z.B. bei Kraftwerken zwischen 10 bis 11 %, bei Brennöfen zur Herstellung von Branntkalk etwa 22 bis 26 %, bei Biogasanlagen zwischen etwa 35 und 55 %, oder bei synthetischen Gasen etwa 98 %), wird die Startkonzentration auf einen Wert, der um 20 bis 50%, insbesondere 30 bis 40% kleiner ist als die $CO_2$-Konzentration der Quelle, gemindert und kontinuierlich oder stufenweise bis zum Ende der Reaktion auf die maximal mögliche Konzentration angehoben. Dies kann auf einfachste Weise durch Verdünnen mit Luft geschehen. Es wurde überraschend gefunden, dass diese Maßnahme den Wert für $\frac{D\,4,3}{D\,90}\;mal\;100$ vergrößert, insbesondere auf 59 oder mehr.

Ferner ist bevorzugt, wenn im Schritt c) zu Beginn der Reaktion eine Temperatur vorgegeben wird, bei der das PCC in der jeweils gewünschten Morphologie anfällt, und diese Temperatur über die Reaktion konstant gehalten wird oder bis zum Ende der Reaktion kontinuierlich oder stufenweise um bis zu 15°C, insbesondere um bis zu 10°C abgesenkt wird. Als Starttemperatur wird demnach die Temperatur vorgegeben, bei der sich die gewünschte Morphologie maßgeblich bilden kann. Im Falle von s-PCC liegt die Starttemperatur im Bereich von 25 bis 45°C, im Falle von r-PCC im Bereich von 8 bis 25°C, im Falle von a-PCC im Bereich zwischen 45 und 75°C. Herkömmlich wird zwar eine bestimmte Starttemperatur ebenfalls vorgegeben, jedoch wird die Temperatur nachfolgend nicht geregelt und bedingt durch die Exothermie der Reaktion ist ein Temperaturanstieg die Folge. Demgegenüber wird erfindungsgemäß die Temperatur konstant gehalten beziehungsweise stufenweise oder kontinuierlich um bis 15°C abgesenkt. Es wurde überraschend gefunden, dass diese Maßnahme den Wert für $\frac{D\,4,3}{D\,90}\;mal\;100$ vergrößert, insbesondere auf 59 oder mehr.

Weiterhin ist bevorzugt, wenn im Schritt c) zu Beginn der Reaktion ein Füllstand der Kalkmilch 50 % bis 80 % des Arbeitsvolumens des Reaktors beträgt und nach einer Keimbildungsphase kontinuierlich oder stufenweise Kalkmilch bis zum Ende der Reaktion zugeführt wird. Der Reaktor wird also zu Beginn der Reaktion lediglich zu 50 % bis 80 % seines Arbeitsvolumens mit Kalkmilch der verlangten Stärke befüllt. Frühestens nach Ablauf der sogenannten Keimbildungsphase, im praktischen Betrieb für alle Morphologien ist dies nach etwa 20 Minuten der Fall, wird stufenweise oder kontinuierlich weiterhin Kalkmilch zudosiert und zwar möglichst gleichmäßig über die gesamte T90 Laufzeit verteilt bis der Reaktor sein nominales Arbeitsvolumen erreicht hat. Nach Ablauf der T90 Zeit, also der maßgeblichen Reaktionszeit, in welcher 90 % des gesamten Umsatzes abgeschlossen sind, wird nicht mehr nachgefüllt. Es wurde überraschend gefunden, dass diese Maßnahme den Wert für $\frac{D\,4,3}{D\,90}\;mal\;100$ vergrößert, insbesondere auf 59 oder mehr.

Schließlich ist bevorzugt, wenn im Schritt c) zu Beginn der Reaktion die Drehzahl des Begasungsrührers dem 0,5 bis 0,9fachem, insbesondere 0,8 bis 0,9fachem der Drehzahl am Ende der Reaktion entspricht und die Drehzahl kontinuierlich oder stufenweise auf den Endwert erhöht wird, wenn mehr als 90 % Umsatz der Reaktion erreicht wird. Der Reaktor wird demnach gestartet mit der vorausberechneten Drehzahl, die so gewählt wurde, dass noch ein Steigerungspotential von etwa 10 bis 50 % möglich ist. Nach Ablauf der Keimbildungsphase, spätestens aber nach Ablauf der T 90 Zeit, wird die Drehzahl des Begasungsrührers kontinuierlich oder stufenweise um die fehlenden 10 bis 50 % bis zum Ende der Reaktion angehoben. Es wurde überraschend gefunden, dass diese Maßnahme den Wert für $\frac{D\,4,3}{D\,90}\;mal\;100$ vergrößert, insbesondere auf 59 oder mehr.

Ein weiterer Aspekt der Erfindung betrifft präzipitiertes Calciumcarbonat (PCC), das nach dem zuvor geschilderten Verfahren herstellbar oder hergestellt ist. Das nach dem Verfahren erhältliche PCC weist eine besondere Kombination aus Korngröße D4,3 und dem Verhältnis $\frac{D\,4,3}{D\,90}$ auf. Die Eigenschaften lassen sich mit bisher bekannten PCC-Verfahren nicht erreichen.

Die Erfindung betrifft somit ferner präzipitiertes Calciumcarbonat mit einer Korngrößenverteilung, bei der $\frac{D\,4,3}{D\,90}\;mal\;100 \geq 59$ ist und mit einer mittleren Korngröße D 4,3 für

(i) scalenoedrisches präzipitiertes Calciumcarbonat (s-PCC) im Bereich von 1,5 bis 5,0 $\mu$m, besonders bevorzugt 2,0 bis 4,0 $\mu$m, insbesondere 2,9 bis 3,1 $\mu$m; oder

(ii) rhomboedrisches präzipitiertes Calciumcarbonat (r-PCC) im Bereich von 0,5 bis 2,5 $\mu$m, besonders bevorzugt 0,8 bis 2,2 $\mu$m, insbesondere 0,9 bis 2 $\mu$m; oder

(iii) aragonitisches präzipitiertes Calciumcarbonat (a-PCC) im Bereich von 1 bis 30 $\mu$m, besonders bevorzugt 2 bis 20 $\mu$m, insbesondere 2,5 bis 15 $\mu$m.

Bevorzugt gilt für das Verhältnis

$$\frac{D\,4,3}{D\,90}\;mal\;100\;\geq\;60,$$

besonders bevorzugt $\geq 62$, ganz besonders bevorzugt $\geq 65$.

Ein weiterer Aspekt der Erfindung liegt in der Verwendung des erfindungsgemäßen PCC als Füllstoff in Papier oder Kunststoff.

Weitere bevorzugte Ausgestaltungen der Erfindung lassen sich den Ansprüchen sowie der nachfolgenden Beschreibung entnehmen.

**Kurzbeschreibung der Figuren**

Die Erfindung wird nachfolgend anhand von Ausführungsbeispielen und dazugehöriger Zeichnungen näher erläutert. Die Figuren zeigen:

Fig. 1   eine schematische Darstellung einer PCC-Anlage;

Fig. 2   die Ergebnisse von Batch-Carboxylierungen im Pilotreaktor für r-PCC, wobei D4,3 als Funktion des spezifischen Energieeintrages aufgetragen ist;

Fig. 3   die Ergebnisse von Batch-Carboxylierungen im Technikumsreaktor für r-PCC, wobei D4,3 als Funktion des spezifischen Energieeintrages aufgetragen ist.

Fig. 4   die Ergebnisse von Batch-Carboxylierungen im Pilotreaktor für s-PCC, wobei D4,3 als Funktion des spezifischen Energieeintrages aufgetragen ist; und

Fig. 5   die Ergebnisse von Batch-Carboxylierungen im Technikumsreaktor für s-PCC, wobei D4,3 als Funktion des spezifischen Energieeintrages aufgetragen ist.

**Detaillierte Beschreibung der Erfindung**

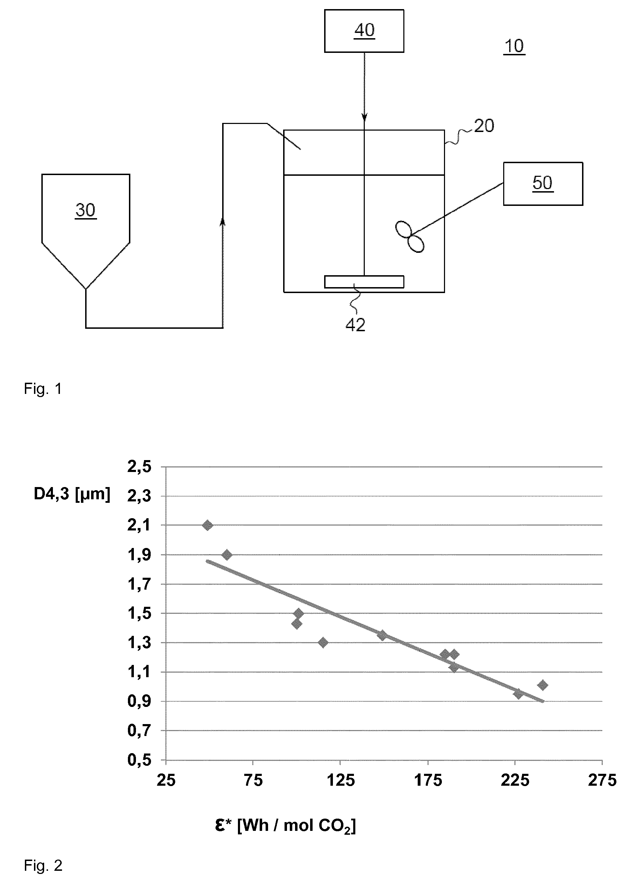

Figur 1 illustriert - stark schematisiert - den grundsätzlichen Aufbau einer PCC-Anlage 10, die zur Durchführung des erfindungsgemäßen Verfahrens genutzt werden kann. Die PCC-Anlage 10 umfasst einen Batch-Reaktor 20, in dem eine wässrige Suspension aus $Ca(OH)_2$ (sogenannte Kalkmilch) vorgelegt wird und in dem unter Eintrag von $CO_2$ nachfolgend PCC gebildet wird. Die Kalkmilch wird über eine Vorlage 30 zugeführt. Das $CO_2$ wird hier über ein geeignetes Belüftungssystem 40, das in diesem Beispiel einen Begasungsrührer 42 umfasst, als Gas in die Kalkmilch eingetragen. Ein weiteres Rührwerk 50 kann vorgesehen sein. Der Reaktor 20 ist temperierbar. Die PCC-Anlage 10 beinhaltet hier nicht näher dargestellte sensorische Mittel zur Überwachung des Füllstands des Reaktors 20 und Erfassung der Temperatur der Kalkmilch. Ferner können sensorische Mittel vorgesehen sein, mit denen direkt oder indirekt auf eine $CO_2$-Konzentration in der Kalkmilch geschlossen werden kann.

Der Erfindung liegt nun unter anderem die Erkenntnis zugrunde, dass der spezifische molare Energieeintrag der maßgebende steuernde Parameter für die Korngröße ist. Dementsprechend sind alle Parameter der PCC-Anlage 10, die im Betrieb derselben einen wesentlichen Beitrag auf den spezifischen molaren Energieeintrag liefern, zu erfassen. Der spezifische molare Energieeintrag entspricht dabei dem Energieeintrag des Gesamtsystems, der erforderlich ist, um ein Mol $CO_2$ von Beginn der Reaktion bis zu einem Umsetzungsgrad von 90 % der batchweise verlaufenden Carboxylierungsreaktion einzutragen.

Wie allgemein geläufig ist, verläuft die Bildung von Calciumcarbonat aus Calciumhydroxid und $CO_2$ im Hauptteil der Reaktion näherungsweise linear. Ab einem Wert von circa 90 bis 95 % der Gesamtreaktion fallen pH-Wert und der Leitfähigkeitswert stark ab und die $CO_2$-Ausbeute nimmt ebenfalls stark ab. Als maßgebliche Reaktionszeit wird daher der Durchschnittswert der $CO_2$-Ausbeute in den ersten 90 % der Gesamtreaktionszeit herangezogen.

Gebräuchlich für die Bemessung der spezifischen Begasungsrate ist der sogenannte vvm Wert der folgendes bedeutet: Volumeneinheit Gas pro Volumeneinheit Reaktorinhalt pro Zeiteinheit. In der industriellen Praxis und bei einem typischen Reaktorinhalt von 10 m$^3$ sind beispielsweise Begasungsraten von etwa 0,25 vvm bis 5 vvm üblich, was umgerechnet bedeutet, dass der Rektor mit möglichen Begasungsraten von 150 Nm$^3$ pro h bis zu etwa 3000 Nm$^3$ pro h begast wird. Kleinere Werte werden als unwirtschaftlich angesehen, größere Werte sind technisch nicht möglich wegen der ansteigenden Gefahr des Durchschlagens der Begasungsluft im Reaktor. Durchschlagen bedeutet, dass die Gasblasen bei Überschreiten der zulässigen Begasungsrate schlagartig koaleszieren und damit kein nennenswerter Stoffübergang mehr möglich ist.

Zumeist verfügen PCC-Anlagen über komplexe Anordnungen zur Begasung des Reaktors, die einen möglichst gleichmäßigen $CO_2$-Eintrag über die Höhe und den Querschnitt des Reaktors bei möglichst geringem Energieverbrauch erlauben. Aus der Summe des Energieverbrauches der im Reaktor befindlichen, mit Motorkraft betriebenen Rührorgane beziehungsweise Begasungsturbinen und der gegebenenfalls den Vordruck liefernden Gebläsestation saldiert sich im Wesentlichen der stündliche Energieverbrauch des Gesamtsystems. Üblich sind Kennzahlen für den Energieverbrauch bezogen auf die Masse an hergestelltem PCC im Bereich von etwa 60 kWh bis 250 kWh pro Tonne hergestelltem PCC und zwar in Abhängigkeit der Charakteristika der Begasungseinrichtung und der vorgegebenen $CO_2$-Konzentration. Der Anlagenbetreiber kennt diesen Energieverbrauch im Allgemeinen sehr genau. Zur Vereinfachung kann von der insgesamt verbrauchten Energie ausgegangen werden, die sich proportional zur tatsächlich eingetragenen Energie verhält.

Im Folgenden wird an einem Beispiel die Berechnung des spezifischen molaren Energieantrags veranschaulicht.

**Berechnungsbeispiel**

Folgender Datensatz einer Carboxylierung ist gegeben, wobei das Ziel die Gewinnung von s-PCC ist:

Herstellung einer reaktiven Kalkmilch mit 11 % Trockengewichtsanteil an Calciumhydroxid und mit der Dichte 1.065 kg pro m$^3$, somit enthaltend 15,8 kmol Calciumhydroxid in 10 m$^3$. Die Viskosität der Kalkmilch beträgt etwa 50 mps.

Der Reaktor wird mit 10 m$^3$ dieser Kalkmilch befüllt.

Die konstante Begasungsrate beträgt 2.000 Nm$^3$/h, was einem vvm Wert von 3,33 entspricht.

Die $CO_2$-Konzentration beträgt 26%.

Der durchschnittliche Ausnutzungsgrad des $CO_2$ beträgt 90 %. Die maßgebliche 90 % Zeit der Carboxylierung (T90 Zeit) beträgt 46 min.

Der gemessene Kraftbedarf einer Turbine beträgt 130 kW.

Die Stromaufnahme eines vorgeschalteten Gebläses beiträgt 40 kW.

Die Gaseintrittstemperatur wird mittels Kühlung auf 40°C eingestellt.

Die Starttemperatur im Reaktor (Kalkmilch) beträgt 38°C. Nach Ablauf von 90 % der Carboxylierung beträgt die Temperatur im Reaktor 72°C.

In den 41 min der Reaktion wurden demnach 90 % der vorgelegten Kalkmilch umgesetzt zu s-PCC. Dies entspricht einer Bildung von 14,3 kmol oder 1.430 kg s-PCC. Für die restlichen 10 % an noch nicht umgesetzter Kalkmilch wird eine längere Reaktionszeit benötigt, da die spezifische Umsatzrate bekanntlich am Ende des Batchzyklus abfällt.

Der gesamte Energieverbrauch für die T90 Zeit beträgt 117 kWh.

Eingetragen wurden in diesem Zeitraum 14,3 kmol $CO_2$. Der spezifische Energieeintrag ($\varepsilon$) pro Mol

$CO_2$ beträgt $\dfrac{117\,kWh}{14,3\,Mol\,CO2}$ = 8,2 Wh/Mol $CO_2$

Der Einfluss der einzelnen Größen auf den spezifischen molaren Energieeintrag ist grundsätzlich bekannt oder kann in einfacher Weise durch den Fachmann an einer gegebenen PCC-Anlage bestimmt werden. So kann beispielsweise für eine Anlage der Füllstand des Reaktors gegen den Gesamtleistungseintrag (Summe aus Gebläse, Begasungseinheit, Rührer, etc.) aufgetragen werden. Ebenso lässt sich die Abhängigkeit der Gasausnutzung von der anliegenden $CO_2$-Konzentration, der Drehzahl des Begasungsrührers, des relativen Gaseintrags, etc. erfassen und auswerten.

Die Figuren 2 bis 5 zeigen die Ergebnisse aus Versuchsreihen, die mit einem Pilotreaktor beziehungsweise technischem Reaktor durchgeführt wurden. Aufgetragen ist jeweils die charakteristische mittlere Korngröße D4,3 gegen den spezifischen Energieeintrag pro Mol eingetragenem $CO_2$ im maßgeblichen Teil der Batch-Reaktion 0 bis 90 %. Die charakteristische Partikelgröße D4,3 wurde jeweils mit einem Laserbeugungs-Partikelgrößenmessgerät Mastersizer der Firma Malvern bestimmt.

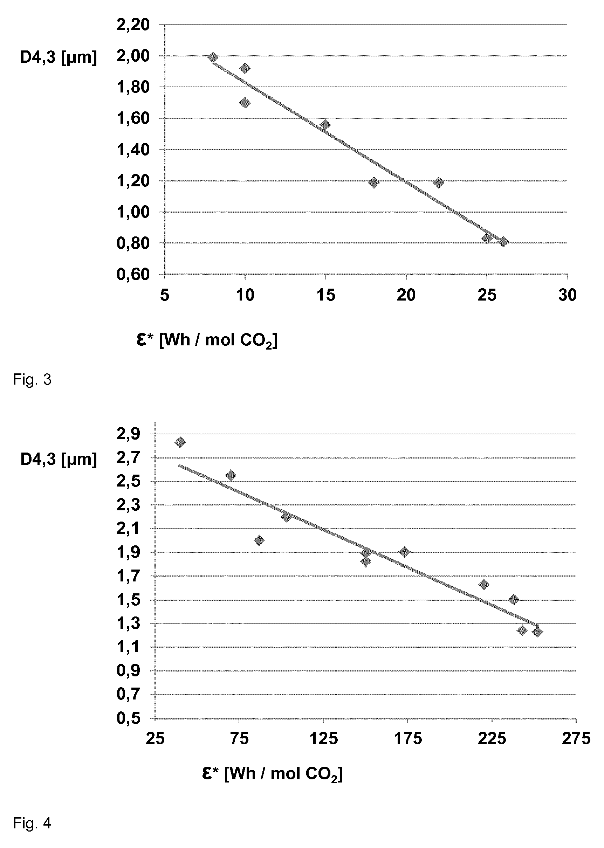

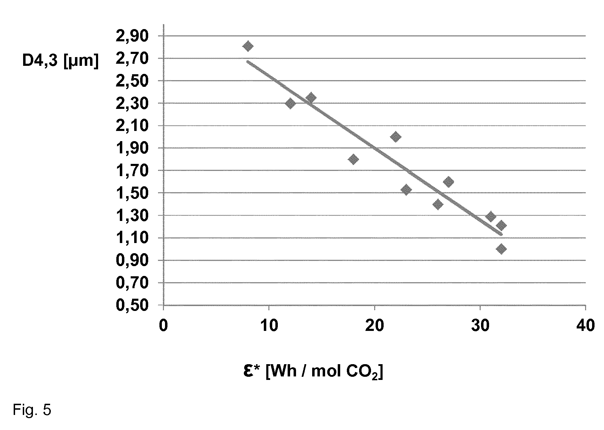

In einer ersten Versuchsreihe wurden durch Variation des Energieeintrags rhomboedrische Kristalle (r-PCC) mit einer Korngröße D4,3 im Bereich von ca. 0,8 $\mu$m bis 2,0 $\mu$m im Pilotreaktor (Figur 2) und technischem Reaktor (Figur 3) hergestellt. In einer weiteren Versuchsreiche wurden skalenoedrische Kristalle (s-PCC) mit einer Korngröße D4,3 im Bereich von ca. 1,1 $\mu$m bis 3,0 $\mu$m im Pilotreaktor (Figur 4) und technischem Reaktor (Figur 5) hergestellt. Zur Anpassung des Energieeintrags wurde in den einzelnen Versuchen unter anderem die $CO_2$-Konzentration, der Füllstand, die Gasmenge sowie die Drehzahl und der Vordruck der Begasungsturbine einzeln oder auch in Kombination variiert.

Beispielhaft sind nachfolgend zwei Datensätze für den Pilotreaktor angegeben:

**Beispiel 1 - Herstellung von r-PCC im Pilotreaktor**

Es wurde folgender Datensatz zu Grunde gelegt:

Kalkmilch 11,6 Gewichtsprozent

Füllstand Reaktor: 9 l

Drehzahl Begasungsturbine: 55 Hz

vvm : 1,1 (0,594 Nm$^3$/h)

$CO_2$-Konzentration: 30 %

Reaktionsdauer T 90: 117 min

Gasausnutzungsgrad: 90,0 %

$CO_2$-Eintrag in der Zeit T 90 : 13,1 Mol

Gesamtenergieeintrag in der Zeit T 90: 1244 Wh

Spezifischer Energieeintrag pro Mol $CO_2$: 95 Wh pro mol $CO_2$

Es wurde r-PCC erzeugt mit einem D4,3 von 1,4 $\mu$m.

**Beispiel 2 - Herstellung s-PCC im Pilotreaktor**

Es wurde folgender Datensatz zu Grunde gelegt:

Kalkmilch 11,3 Gewichtsprozent

Füllstand Reaktor: 9 l

Drehzahl Begasungsturbine: 35 Hz

vvm : 0,5 (0,27 Nm$^3$/h)

$CO_2$-Konzentration: 30 %

Reaktionsdauer T 90: 281 min

Gasausnutzungsgrad: 81 %

$CO_2$-Eintrag in der Zeit T 90 : 12,8 Mol

Gesamtenergieeintrag in der Zeit T 90: 536 Wh

Spezifischer Energieeintrag pro Mol $CO_2$: 42 Wh pro mol $CO_2$

Es wurde s-PCC erzeugt mit einem D4,3 von 2,83 $\mu$m.

Es ist zu erkennen, dass es eine direkte Abhängigkeit zwischen dem molaren Energieeintrag pro Mol eingetragenem $CO_2$ und der resultierenden charakteristischen Korngröße D4,3 gibt. Je größer der auf ein Mol $CO_2$ eingetragene Energiebetrag ist, desto kleiner werden die Kristalle und umgekehrt. Überraschenderweise kann man also auch bei geringeren $CO_2$-Konzentrationen durch Kombination entsprechender Parameter - zum Beispiel der Begasung, des Füllstandes und der Drehzahl der Begasungseinrichtung - kleinere Partikel erzeugen, wenn nur entsprechende Parameter so zusammengestellt werden, dass der zugehörige resultierende spezifische Energieeintrag dargestellt werden kann.

Die beiden nachfolgenden Beispiele 3 und 4 zeigen exemplarisch s-PCC Chargen mit einem sehr großen Wert für $\frac{D\,4,3}{D\,90}\,mal\,100,$ der durch gezielte Variation der Versuchsbedingungen erreicht wurde.

### Beispiel 3 - Herstellung von s-PCC

Es wurde folgender Datensatz zu Grunde gelegt:

Kalkmilch 11,3 Gewichtsprozent

Füllstand Reaktor: zu Beginn der Carboxylierung: 220 l, nach 20 min 280 l, nach 40 min 240 l bis zum Ende der Reaktion

Drehzahl Begasungsturbine: zu Beginn der Carboxylierung 38 Hz, nach 20 min 40 Hz, nach 40 min 45 Hz bis zum Ende der Reaktion

Temperatur: 45°C, konstant (Wärmeabfuhr über innenliegenden Kühler)

$CO_2$-Konzentration: 45 % (Biogas), konstant

vvm : 1,5 pro min, konstant

Spezifischer Energieeintrag pro Mol $CO_2$ unmittelbar zu Beginn der Reaktion: 7 Wh pro mol $CO_2$

Es wurde s-PCC erzeugt mit einem charakteristischen D4,3 von 3,0 $\mu$m und einem Wert für $\frac{D\,4,3}{D\,90}\,mal\,100$ von 62.

### Beispiel 4 - Herstellung von s-PCC

Es wurde folgender Datensatz zu Grunde gelegt:

Kalkmilch 11,3 Gewichtsprozent

Füllstand Reaktor: zu Beginn der Carboxylierung: 220 l, nach 20 min 280 l, nach 40 min 240 l bis zum Ende der Reaktion

Drehzahl Begasungsturbine: zu Beginn der Carboxylierung 38 Hz, nach 20 min 40 Hz, nach 40 min 45 Hz bis zum Ende der Reaktion

Temperatur: zu Beginn der Carboxylierung 45°C, nach 20 min 43°C, nach 40 min 41°C bis zum Ende der Reaktion (Wärmeabfuhr über innenliegenden Kühler)

$CO_2$-Konzentration: zu Beginn der Carboxylierung 35 %, nach 40 min 45 %

vvm : 1,5 pro min, konstant

Spezifischer Energieeintrag pro Mol $CO_2$ unmittelbar zu Beginn der Reaktion: 8 Wh pro mol $CO_2$

Es wurde s-PCC erzeugt mit einem charakteristischen D4,3 von 2,9 $\mu$m und mit einem Wert für $\frac{D\,4,3}{D\,90}\,mal\,100$ von 61.

### Patentansprüche

**1.** Verfahren zur Herstellung von präzipitiertem Calciumcarbonat (PCC) durch Einleiten von Kohlendioxid in Kalkmilch in einer PCC-Anlage, wobei das PCC eine Korngrößenverteilung aufweist, bei der $\frac{D\,4{,}3}{D\,90}\,mal\,100 \geq 59$ ist und je nach Verfahrensführung die mittlere Korngröße D 4,3 für

(i) scalenoedrisches präzipitiertes Calciumcarbonat (s-PCC) im Bereich von 1,5 bis 5,0 μm liegt; oder
(ii) rhomboedrisches präzipitiertes Calciumcarbonat (r-PCC) im Bereich von 0,5 bis 2,5 μm liegt; oder
(iii) aragonitisches präzipitiertes Calciumcarbonat (a-PCC) im Bereich von 1 bis 30 μm liegt;

wobei das Verfahren die folgenden Schritte umfasst:

a) Erfassen aller Parameter der PCC-Anlage, die im Betrieb der PCC-Anlage einen wesentlichen Beitrag auf den spezifischen molaren Energieeintrag liefern, wobei der spezifische molare Energieeintrag dem Energieeintrag des Gesamtsystems entspricht, der erforderlich ist, um ein Mol $CO_2$ von Beginn der Reaktion bis zu einem Umsetzungsgrad von 90 % der batchweise verlaufenden Carboxylierungsreaktion einzutragen;
b) Festlegen der mittleren Korngröße D 4,3 in Abhängigkeit vom spezifischen molaren Energieeintrag;
c) Festlegen des $\frac{D\,4{,}3}{D\,90}$-Verhältnisses in Anhängigkeit von zumindest einem der folgenden Parameter: $CO_2$-Konzentration während der Reaktion, Temperatur der Kalkmilch, Füllstand im Reaktor der PCC-Anlage, und Drehzahl eines Begasungsrührers der PCC-Anlage; und
d) Einleiten von Kohlendioxid in die Kalkmilch unter Maßgabe der in den Schritten b) und c) bestimmten Vorgaben.

2. Verfahren nach Anspruch 1, bei dem im Schritt b) zuerst ein linearer Zusammenhang zwischen der mittleren Korngröße D 4,3 und dem spezifischen molaren Energieeintrag des Gesamtsystems ermittelt wird.

3. Verfahren nach Anspruch 1, bei dem im Schritt c) zu Beginn der Reaktion die $CO_2$-Konzentration dem 0,5 bis 0,8-fachen der $CO_2$-Konzentration am Ende der Reaktion entspricht und die $CO_2$-Konzentration kontinuierlich oder stufenweise erhöht wird.

4. Verfahren nach Anspruch 1, bei dem im Schritt c) zu Beginn der Reaktion eine Temperatur vorgegeben wird, bei der das PCC in der jeweils gewünschten Morphologie anfällt, und diese Temperatur über die Reaktion konstant gehalten wird oder bis zum Ende der Reaktion kontinuierlich oder stufenweise um bis zu 15°C abgesenkt wird.

5. Verfahren nach Anspruch 1, bei dem im Schritt c) zu Beginn der Reaktion ein Füllstand der Kalkmilch 50 % bis 80 % des Arbeitsvolumens des Reaktors beträgt und nach einer Keimbildungsphase kontinuierlich oder stufenweise Kalkmilch bis zum Ende der Reaktion zugeführt wird.

6. Verfahren nach Anspruch 1, bei dem im Schritt c) zu Beginn der Reaktion die Drehzahl des Begasungsrührers dem 0,5 bis 0,9fachen der Drehzahl am Ende der Reaktion entspricht und die Drehzahl kontinuierlich oder stufenweise auf den Endwert erhöht wird, wenn mehr als 90 % Umsatz der Reaktion erreicht wird.

7. Präzipitiertes Calciumcarbonat (PCC) hergestellt nach einem Verfahren gemäß einem der vorhergehenden Ansprüche.

8. Präzipitiertes Calciumcarbonat (PCC) mit einer Korngrößenverteilung, bei der $\frac{D\,4{,}3}{D\,90}\,mal\,100 \geq 59$ ist und mit einer mittleren Korngröße D 4,3 für

(i) skaleonedrisches präzipitiertes Calciumcarbonat (s-PCC) im Bereich von 1,5 bis 5,0 μm; oder
(ii) rhomboedrisches präzipitiertes Calciumcarbonat (r-PCC) im Bereich von 0,5 bis 2,5 μm; oder
(iii) aragonitisches präzipitiertes Calciumcarbonat (a-PCC) im Bereich von 1 bis 30 μm.

9. PCC nach Anspruch 8, bei dem für das $\frac{D\,4{,}3}{D\,90}$-Verhältnis gilt: $\frac{D\,4{,}3}{D\,90}\,mal\,100 \geq 60$.

10. PCC nach Anspruch 8, wobei das s-PPC eine mittlere Korngröße D 4,3 im Bereich von 2,0 bis 4,0 μm, insbesondere 2,9 bis 3,1 μm aufweist.

11. PCC nach Anspruch 8, wobei das r-PPC eine mittlere Korngröße D 4,3 im Bereich von 0,8 bis 2,2 μm aufweist.

12. PCC nach Anspruch 8, wobei das a-PPC eine mittlere Korngröße D 4,3 im Bereich von 2 bis 20 μm aufweist.

13. Verwendung von PCC nach Anspruch 7 oder 8 als Füllstoff für Papier oder Kunststoff.

Fig. 1

Fig. 2

Fig. 3

Fig. 4

Fig. 5

Europäisches
Patentamt

European
Patent Office

Office européen
des brevets

# EUROPÄISCHER RECHERCHENBERICHT

**Nummer der Anmeldung**

EP 16 17 2229

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A,D | FENG ET AL: "Effect of various factors on the particle size of calcium carbonate formed in a precipitation process", MATERIALS SCIENCE AND ENGINEERING A: STRUCTURAL MATERIALS: PROPERTIES, MICROSTRUCTURES AND PROCESSING, ELSEVIER BV, NL, Bd. 445-446, 18. Januar 2007 (2007-01-18), Seiten 170-179, XP005821990, ISSN: 0921-5093, DOI: 10.1016/J.MSEA.2006.09.010 * das ganze Dokument * ----- | 1-13 | INV. C01F11/18 D21H17/67 D21H19/38 D21H21/52 |
| A | EP 2 599 750 A1 (HF BIOTEC BERLIN GMBH [DE]) 5. Juni 2013 (2013-06-05) * Absätze [0014], [0038], [0045] * ----- | 1-13 | |

**RECHERCHIERTE SACHGEBIETE (IPC)**

C01F
D21H

Der vorliegende Recherchenbericht wurde für alle Patentansprüche erstellt

| Recherchenort | Abschlußdatum der Recherche | Prüfer |
|---|---|---|
| München | 26. Oktober 2016 | Nobis, Barbara |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 16 17 2229

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

26-10-2016

| Im Recherchenbericht angeführtes Patentdokument | Datum der Veröffentlichung | Mitglied(er) der Patentfamilie | Datum der Veröffentlichung |
|---|---|---|---|
| EP 2599750 A1 | 05-06-2013 | EP 2599750 A1<br>ES 2522543 T3<br>WO 2013079436 A1 | 05-06-2013<br>17-11-2014<br>06-06-2013 |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6251356 B1
- EP 1222146 B1

- EP 1712597 A1

**In der Beschreibung aufgeführte Nicht-Patentliteratur**

- **LAUT GERNOT KRAMMER et al.** *Part. Part. Syst. Charact.,* 2002, vol. 19, 348-353
- **BO FENG et al.** Effect of various factors on the particle size of calcium carbonate formed in a precipitation process. *Materials Science and Engineering A,* 2007, vol. 445- 446, 170-179

- **KRALJ ; BRECIVIC.** *Croatica Chimica Acta,* 2007, vol. 80 (3-4), 467-484